# FASCICULE DE BREVET EUROPEEN

(11) **EP 1 014 317 B1**
(45) Date de publication et mention de la délivrance du brevet: **02.01.2004**
(21) Numéro de dépôt: 99402731.6
(22) Date de dépôt: 03.11.1999
(51) Int. Cl.: G07F 7/10, G07F 7/08

(54) **Procédé de paiement sécurisé**
Gesichertes Bezahlungsverfahren
Secure payment method

(30) Priorité: 14.12.1998 FR 9815778
(43) Date de publication de la demande: 28.06.2000
(73) Titulaire: SAGEM S.A., 75015 Paris (FR)
(72) Inventeur: Sarradin, M.Jean-Louis, 95000 Cergy (FR)
(74) Mandataire: Schmit, Christian Norbert Marie

(56) Documents cités:
- EP-A- 0 785 534
- WO-A-96/13814
- WO-A-97/18653
- WO-A-97/45814
- WO-A-98/06214
- WO-A-98/34203
- WO-A-98/42173
- DE-U- 29 520 925

## Description

La présente invention a pour objet un procédé de paiement sécurisé. Dans l'invention, ce paiement sera effectué par l'intermédiaire d'une carte à puce en respectant par exemple un protocole bancaire de sécurité. Un tel procédé bancaire présente toutes les garanties de résistance aux fraudes. Il est par ailleurs accepté par toute la profession bancaire. Le but de l'invention est de favoriser l'utilisation de ce type de paiement car il est le plus sûr en matière de transactions commerciales.

Le document WO-A-9 834 203 décrit un procédé de paiement comprenant les étapes suivantes, on définit des caractéristiques d'une transaction commerciale entre un vendeur et un utilisateur d'un téléphone mobile,
on transmet à un centre payeur par un terminal du vendeur une requête en paiement, un numéro d'appel du téléphone mobile du client, et des caractéristiques de la transaction, le centre payeur appelle le téléphone mobile, lorsque la connexion est établie, le centre payeur fait exécuter par le téléphone mobile une session de paiment lors de la session de paiement, le téléphone mobile lance une procédure securisé de paiement avec une unité de mémoire.

Un paiement comporte au préalable une transaction commerciale. Une telle transaction comporte essentiellement la définition des références d'un bien à acquérir, ou d'une prestation à se faire servir, et la communication du prix correspondant. Le client en payant le prix bénéficie en contrepartie du bien ou de la prestation. Dans un paiement par carte à puce, les références de la transaction sont communiquées à un terminal de paiement qui élabore un message de paiement. Ce message de paiement comporte la désignation du bien ou de la prestation et le prix à payer. Il comporte par ailleurs des informations telles que la date et l'heure de la transaction. Le message de paiement comporte également la désignation des références bancaires du commerçant. Ces références bancaires servent à virer sur le compte bancaire du commerçant la somme qui lui est payée. Ne sont strictement essentiels dans un tel message de paiement que le prix et les références bancaires du commerçant ainsi que celles d'un payeur.

Comme dernier argument, le message de paiement comporte en effet la désignation d'un compte bancaire du client, et l'accord de ce client sur le paiement du prix. La désignation du compte bancaire est réalisée en introduisant dans le terminal du commerçant, qui est aussi un lecteur de carte à puce, une carte à puce du client. La manifestation de l'accord du client est une opération complexe. En effet autant il est facile au client de donner son accord pour le paiement du prix, autant il est nécessaire pour le commerçant de s'assurer d'une part que la carte à puce introduite dans son terminal est une carte à puce autorisée et que d'autre part le détenteur de cette carte à puce en est bien le détenteur légal.

La première opération est réalisée au cours d'une authentification. Dans ce cadre le terminal échange avec la carte à puce des informations pour s'assurer que la carte à puce n'est pas une carte à puce falsifiée. Dans un deuxième temps, la carte à puce effectue une vérification de ce que le porteur est le porteur légal. La deuxième opération, qui peut éventuellement être placée avant la première, comporte la composition par le porteur, sur un clavier du terminal, d'un code d'identification PIN (Personal Identification Number, numéro d'identification personnel) que la carte à puce utilise pour vérifier qu'elle est sollicitée normalement. Dans un troisième temps, il est également possible à la carte à puce d'authentifier le lecteur : c'est-à-dire de vérifier que le lecteur est un lecteur autorisé. L'authentification du lecteur, par la carte à puce est du même type que l'authentification de la carte à puce par le lecteur.

Ce faisant, en composant son code PIN, le porteur effectue deux opérations. Une première opération, comme dit ci-dessus, consiste à montrer qu'il est le bon porteur de la carte à puce. Deuxièmement, juridiquement le fait de composer le bon code PIN est considéré comme un accord de paiement.

Une fois que ces opérations sont réalisées, le message de paiement est entièrement constitué. Le message de paiement comporte explicitement, ou implicitement, les informations suivantes : le numéro de compte bancaire du commerçant, le montant de la transaction, le numéro du compte bancaire du client. Il peut comporter d'autres indications comme le jour de la transaction, la nature de la transaction, ainsi qu'un numéro d'opération indiquant, pour le terminal, le nombre d'opérations traitées dans la journée jusqu'à cette dernière opération. Ce message de paiement est ensuite envoyé, en général la nuit, à un centre payeur par une communication téléphonique. Dans le centre payeur le paiement est effectué : le message de paiement est transformé en paiement.

Dans certains cas, compte tenu de montants élevés des transactions, le message de paiement doit être autorisé par une autorisation préalable du centre payeur. Dans ce cas, une connexion en temps réel est effectuée au centre payeur, dans la période au cours de laquelle le client a composé son code PIN. Au cours de cette connexion, le montant disponible sur le compte du client est vérifié ou peut être vérifié et peut par ailleurs être réservé en paiement de la transaction concernée. Au cours de ces communications nocturnes, ou bien de ces communications aléatoires de demandes d'autorisation, la mémoire du terminal de paiement est mise à jour pour lui communiquer des numéros de cartes à puce interdites. Celles-ci peuvent être interdites notamment parce que leur véritable titulaire y a fait opposition après la constatation d'un vol.

Cette procédure très complexe nécessite donc une diffusion chez les commerçants d'un ensemble important de moyens, les terminaux de paiement et les liaisons téléphoniques régulières. Cette diffusion est assez longue à mettre en oeuvre. De ce fait, certains commerçants peuvent en être démunis. En outre, dans certains cas, le paiement ne peut pas être effectué par carte à puce parce que tout simplement la partie vendeuse n'est pas commerçante. Par exemple un simple particulier ne peut pas se faire payer, par carte à puce (avec toute la sécurité apportée), une vente d'un bien ou d'un service quelconque. Dans un autre domaine celui de la vente par correspondance, le commerçant n'est lui-même pas présent physiquement, et encore moins ses instruments de paiement.

Dans une précédente demande de brevet français FR 98 08717 déposée le 03 juillet 1998, on a imaginé de faire effectuer par un tiers, en l'occurrence un opérateur de téléphonie mobile, certaines des opérations citées ci-dessus qui sont notamment effectuées par un terminal de paiement classique. Ce type d'opérations peut présenter pour l'opérateur de téléphonie mobile l'inconvénient de devenir partie prenante dans la transaction. Sa prestation ne se limite plus au simpie acheminement de données de paroles, ou de données informatiques, mais à l'accomplissement de certaines des opérations de vérification, de certification, ou d'authentification qui engagent sa responsabilité. En outre, en agissant de cette façon la multiplicité des opérateurs de téléphonie mobile implique de devoir conclure des contrats avec chacun d'eux et, lors du lancement de l'opération de paiement la nécessité pour le payeur de choisir l'opérateur avec lequel il va effectuer la transaction. Le procédé décrit dans cette demande de brevet conduit par ailleurs à devoir dupliquer dans un circuit de contrôle du téléphone mobile des données de type secret d'une carte à puce bancaire. Une telle procédure peut rencontrer des réticences.

Dans la présente invention, on a résolu ce problème en utilisant un téléphone mobile détenu par un client et muni d'une part d'un circuit de contrôle de sécurité, notamment de type SIM (Secure Identification Module, module d'identification sécurisé), et d'autre part d'un lecteur de carte à puce associé. La détention du téléphone mobile par le client ne signifie pas que le client en soit obligatoirement propriétaire. Elle signifie seulement que ce téléphone mobile est mis à la disposition de ce client, au moins temporairement pour la phase de paiement.

On provoque alors, au moment de la transaction l'émission d'un message de prépayement destiné à un centre payeur. En lieu et place des coordonnées bancaires du client et du résultat des authentifications et contrôle du code porteur de ce client ainsi que de l'obtention de son accord, le message de prépayement envoyé par le commerçant comporte le numéro de téléphone de téléphonie mobile du client utilisateur.

Dans ces conditions, le centre payeur, de sa propre initiative et sous sa responsabilité, prend contact avec ce téléphone mobile. Lorsque la liaison est établie, le téléphone mobile fait exécuter, par le circuit de sécurité SIM, le protocole de vérification normalement effectué par un terminal de paiement. En variante le téléphone mobile lui-même comporte un programme sécurisé pour mener à bien ce protocole. Ce programme sécurisé n'est donc pas nécessairement ni chargé ni exécuté dans le circuit SIM. En agissant ainsi, le téléphone mobile, au cours de la session téléphonique devient un terminal de paiement électronique par carte à puce, pour une seule opération déterminée. L'invention présente alors la particularité que la mise à jour régulière ou inopinée du terminai de paiement provisoire ainsi constitué peut être effectué simplement. Au lieu de communiquer une liste de cartes à puce interdites, au cours de la communication le téléphone mobile communique le numéro de la carte à puce qui est introduite dans son lecteur. Si celle-ci est autorisée, la suite des opérations normales d'un terminal est entreprise par le iecteur de carte à puce du téléphone mobile.

L'invention a donc pour objet un procédé de paiement caractérisé en ce qu'il comporte les étapes suivantes
- on définit des caractéristiques d'une transaction commerciale entre un vendeur et un utilisateur d'un téléphone mobile,
- on munit le téléphone mobile de l'utilisateur d'une interface de lecture d'une carte à puce,
- on transmet à un centre payeur par un terminal du vendeur une requête en paiement, un numéro d'appel du téléphone mobile du client, et des caractéristiques de la transaction,
- le centre payeur appelle le téléphone mobile,
- lorsque la connexion est établie, le centre payeur fait exécuter par le téléphone mobile une session de paiement,
- lors de la session de paiement, le téléphone mobile lance une procédure sécurisée de paiement avec une carte à puce du client insérée dans le lecteur de carte à puce du téléphone mobile.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique des moyens utilisables pour mettre en oeuvre le procédé de l'invention ;
- Figures 2a et 2b : une représentation schématique selon l'invention de l'architecture fonctionnelle du téléphone mobile dans son fonctionnement avec un circuit de sécurité SIM et une carte à puce, et d'une requête en session de paiement envoyée par un centre payeur ;
- Figure 3 : une représentation chronologique des opérations mises en oeuvre dans les différents moyens de la figure 1 pour mener à bien l'opération de paiement ;
- Figures 4a et 4b : un exemple d'opérations d'authentification, de certification ou de contrôle de porteur mis en oeuvre entre le circuit SIM et la carte à puce, et simulant les opérations effectuées par un terminal de paiement de type connu.

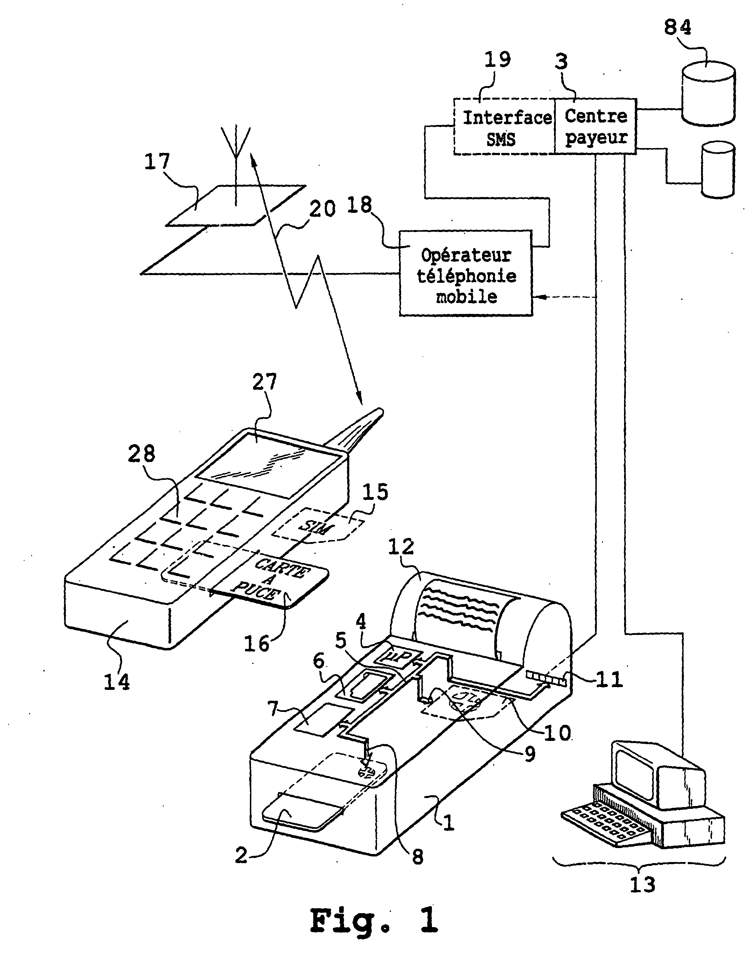

La figure 1 montre l'ensemble des moyens schématiquement nécessaires pour mener à bien le procédé de l'invention. Chez un commerçant, d'une manière classique, on dispose d'un terminal de paiement 1. Le terminal 1 est susceptible d'entrer en relation d'une part avec une carte à puce 2 d'un client et d'autre part avec un centre payeur 3 à qui est envoyé un message de paiement comme vu ci-dessus. Le terminal 1 comporte essentiellement un microprocesseur 4 relié par un bus 5 d'adresses, de commandes et de données à une mémoire programme 6 et à une mémoire de travail et de données 7. Le bus 5 est également relié à un connecteur périphérique 8 de lecture de la carte à puce 2 et à une interface 11 de communication avec le centre payeur 3. Dans une variante ce bus 5 est relié à un connecteur 9 de lecture d'un circuit de sécurisation 10 du terminal 1. Le terminal 1 peut comporter d'une manière connue un clavier, un écran, ainsi qu'une imprimante 12 pour imprimer une facturette relative à la transaction et au paiement effectué. Ces périphériques d'édition sont aussi reliés au bus 5. L'interface 11 comporte généralement un modem de manière à ce que la liaison du terminal 1 au centre payeur 3 soit effectuée par voie téléphonique.

A l'opposé dans l'invention, chez le vendeur bien que les fonctions effectuées par le terminal 1 doivent continuer à être assurées, on ne disposera pas pour le paiement de ce terminal 1. Au lieu de ce terminal 1, on disposera d'un moyen simple de communication avec le centre payeur 3. Ce moyen sera par exemple un micro-ordinateur 13, lui aussi muni d'un modem et susceptible d'entrer en relation par voie téléphonique avec le centre payeur 3. En variante le terminal 1 est capable d'effectuer des opérations classiques, avec envoi de message de paiement et, selon l'invention, l'envoi de message de prépayement.

Dans une variante préférée, le centre payeur 3 sera accessible par le réseau Internet. Comme on le verra par la suite ceci ne présente aucune difficulté compte tenu de ce que l'opération bancaire, avec toutes les sécurités nécessaires pour qu'elle soit accomplie, ne se situe pas dans la liaison entre les moyens 13 et le centre payeur 3. En effet dans l'invention on dissocie l'acte d'achat de l'acte de paiement. L'acte d'achat n'a besoin d'aucune sécurité. Le réseau Internet peut alors très bien convenir. N'importe quel système peut aussi être utilisé pour communiquer au centre payeur les caractéristiques de la transaction. Par contre l'acte de paiement est sécurisé avec le procédé de l'invention comme on le verra plus loin. De ce fait le micro-ordinateur 13 peut être celui d'un particulier, vendeur, qui s'entend avec un acheteur, lequel acheteur est muni d'un téléphone mobile et d'une carte à puce. Pour des ventes par correspondance, le site Internet du vendeur pourra proposer un écran dans lequel pourront être renseignées par l'acheteur les indications du prépayement. Dans ce cas le micro-ordinateur 13 est situé chez l'acheteur. Seul le site Internet peut être considéré comme étant chez le vendeur. Au besoin le centre payeur héberge un site Internet de paiement selon l'invention.

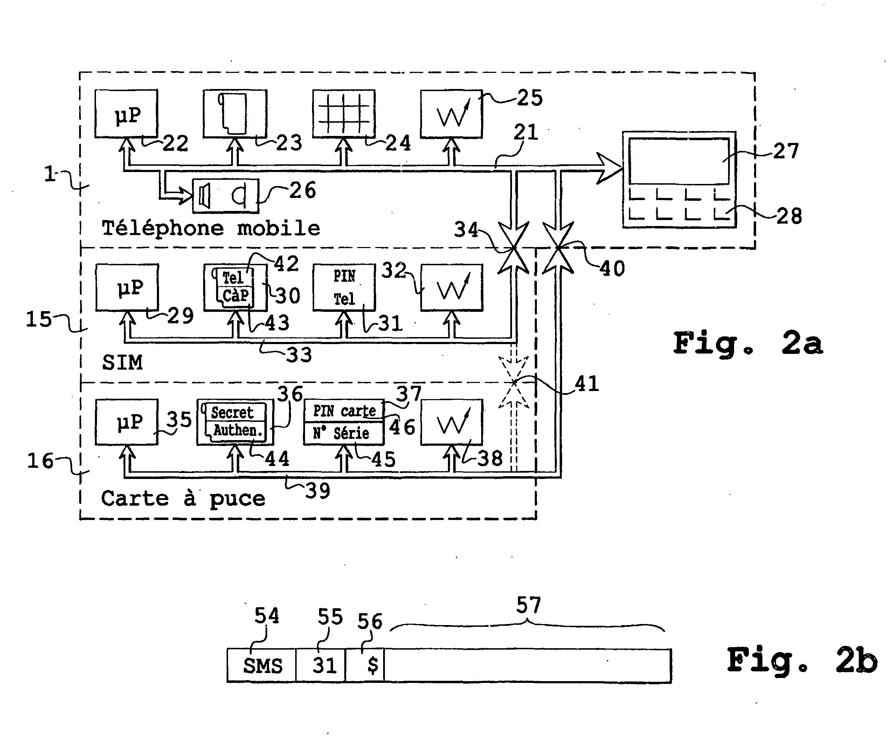

Comme autre moyen essentiel de l'invention on disposera d'un téléphone mobile 14 particulier. Ce téléphone mobile particulier 14, dont l'architecture informatique est décrite sur la figure 2a, peut entrer en relation d'une part avec un micromodule de sécurité SIM 15 et d'autre part, par un lecteur interne de carte à puce (non représenté) avec une puce d'une carte à puce 16 du même type que la carte à puce 2. En variante la carte à puce 16 est remplacée par un jeton à puce ayant un même rôle de paiement. Carte à puce a ici un sens général.

Lors de l'opération de paiement proprement dite, qui correspond à la transaction dont les références auront été communiqué par le micro-ordinateur 13 au centre payeur 3, le téléphone mobile 14 entre en relation avec le centre 3 par l'intermédiaire d'une station de base 17 reliée à des circuits 18 de commutation et d'acheminement d'un opérateur de téléphonie mobile.

Dans l'invention le centre payeur 3 possède un circuit interface 19 pour mettre en oeuvre un procédé particulier de fonctionnement du téléphone mobile 14. Néanmoins, on pourrait se passer du circuit 19 et prévoir de remplacer les opérations qu'il effectue par des opérations verbales. En effet, la transaction, l'opération de paiement proprement dite n'est effectuée qu'entre la carte à puce 16 et le circuit de sécurité 15 (ou le téléphone mobile lui-même) jouant le rôle de lecteur de carte à puce. Cette opération n'est effectuée, pour une session de communication téléphonique, que pour une transaction déterminée. En conséquence la liaison hertzienne 20 par laquelle le circuit 15 et ou le téléphone mobile 14 échangent une information relative à la menée à bien de cette transaction, si elle est de préférence effectuée en temps réel, pourra être effectué en temps différé. La particularité de l'invention se situe alors dans le fait que toutes les opérations névralgiques résistent sans difficultés aux aléas de transmission.

La figure 2a montre les moyens mis en oeuvre dans le téléphone mobile 14. Celui-ci comporte d'une manière connue un bus 21 relié à un microprocesseur 22, à une mémoire programme 23, une mémoire de données 24 et une mémoire de travail 25. Le bus 21 est encore relié à des circuits 26 de traitement de la parole et à un périphérique écran 27 - clavier 28. Le circuit 15 SIM comporte de la même façon un microprocesseur 29, une mémoire programme 30, une mémoire de données 31 et une mémoire de travail 32 reliées entre eux par un bus 33. Le bus 33 est relié au bus 21 à une interface 34 (en pratique un connecteur pour se connecter à la puce du circuit 15 SIM). La carte à puce 16 comporte elle aussi un microprocesseur 35, une mémoire programme 36, une mémoire de données 37 et une mémoire de travail 38 (plus exactement des registres dans ce dernier cas). Dans la puce de la carte ces organes sont reliés entre eux par un bus 39. Le bus 39 est relié au bus 21 par une interface 40 du même type que l'interface 34. Il serait toutefois possible de relier le bus 39 au bus 33 par une interface 41. Ces trois systèmes à microprocesseur fonctionnent en se donnant l'initiative mutuellement. Selon l'opération envisagée, l'authentification, le contrôle de porteur, et la certification, un ou l'autre des systèmes aura la main sur l'ensemble.

Dans l'invention, la mémoire programme 30 du circuit SIM 15 possède un programme téléphonique 42 chargé d'autoriser le fonctionnement du téléphone mobile par un utilisateur. En vertu de ce programme, cet utilisateur est notamment sollicité pour composer un code PIN de téléphone (celui relatif au téléphone) mémorisé par ailleurs dans la mémoire 31. Le programme 42 compare le code composé au code mémorisé. La mémoire 30 comporte en plus un programme 43 susceptible de transformer le téléphone mobile en terminal de paiement par carte à puce. Ce programme 43 est un apport de l'invention par rapport à l'état de la technique où, dans la mémoire 30 n'était stocké que le programme 42.

La carte à puce 16 est classique. Elle comporte dans sa mémoire programme 36 un programme classique 44 de vérification de code secret et d'authentification (éventuellement). Dans la mémoire de données 37, une zone 45 visible par l'extérieur, c'est-à-dire transmissible sur les interfaces 40 ou 41, comporte des indications relatives à la carte, notamment le numéro de série de la carte, ainsi que l'état de certains compteurs propres à la carte, par exemple un compteur d'opérations. On stocke un secret de la puce dans une autre zone 46, secrète, dont le contenu ne peut pas être accessible sur les interfaces 40 ou 41, et dont la protection physique vis-à-vis des fraudeurs est particulièrement renforcée. Lors des échanges entre la carte à puce 16 et le circuit SIM 15, le bus 39, le bus 33 et le bus 21 peuvent être laissés à la disposition du microprocesseur 29, qui en application du programme 43 gère la communication entre cette carte à puce et ce circuit SIM.

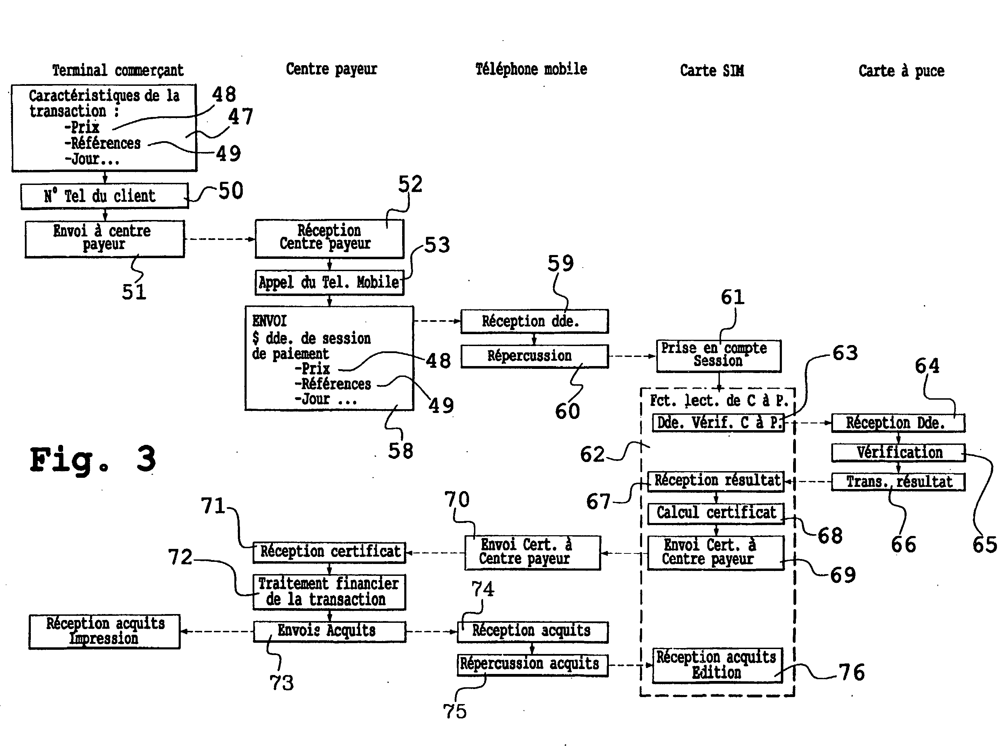

Dans la variante, le sous programme de paiement correspondant au sous programme 43 est sécurisé, notamment par une certification et sa mémorisation est effectuée dans la mémoire 23. Dans ce cas, le protocole sécurisé de paiement peut être effectué par le microprocesseur 22, sans intervention du microprocesseur 29 du circuit SIM 15. La figure 3 montre d'une manière plus précise les différentes opérations qui se passent dans les différents systèmes décrits jusqu'ici pour mener à bien un paiement. Elle montre les différentes opérations comme si toutes ces opérations étaient effectuées en temps réel. Cependant toutes ces opérations, bien qu'effectuées de préférence en temps réel peuvent être séparées par des attentes, voire certaines d'entre elles être repoussées à la nuit si des contraintes de trafic le demandent.

La procédure commence par une étape 47 de définition, chez le commerçant, des caractéristiques de la transaction. Par commerçant on entend essentiellement un vendeur, c'est-à-dire éventuellement un particulier dans le cas notamment de transaction de type porte-monnaie électronique. Dans ce cas la carte à puce 16 pourra être une carte à puce de type porte-monnaie électronique. Les caractéristiques de la transaction comporteront essentiellement comme indiqué ci-dessus d'une part le prix 48 de la transaction et d'autre part des références 49 de cette transaction. Les références 49 concernent essentiellement les références bancaires du commerçant auprès d'un organisme bancaire. Les caractéristiques de la transaction peuvent comporter par ailleurs des indications relatives au jour et à l'heure de la transaction ainsi que certaines autres informations de type juridiques (réserve de propriété, paiement conditionnel, etc.). Selon l'invention, le commerçant va informer le centre payeur 3 de ces caractéristiques de transaction. Il les fait accompagner au cours d'une étape 50 du numéro de téléphone mobile du client. Par exemple avec son micro-ordinateur 13, le client ou le commerçant aboutit sur un site Internet du commerçant ou du centre payeur 3. En choisissant dans ce site Internet une option de paiement par téléphone mobile, il se retrouve face à un écran avec des zones à renseigner dans lesquelles il indique les informations 48, 49 et 50 ci-dessus.

Une étape 51 d'envoi de ces informations au centre payeur 3 prend par exemple la forme d'une validation de l'enregistrement dans cet écran des indications composées. Parmi ces informations certaines sont essentielles pour l'invention. Ce sont d'une part le prix 48, d'autre part les références bancaires du commerçant 49 et enfin le numéro de téléphone mobile du client 50. Si ces zones ne sont pas renseignées correctement, le programme dans le centre payeur 3 interdit la validation de l'écran, au besoin en signalant l'erreur à corriger. Il est possible bien entendu de se passer d'une session Internet et d'envisager que dans le centre payeur 3, un opérateur ou une opératrice demanderont verbalement au vendeur d'indiquer les informations 48 à 50. Dans ce cas éventuellement le paiement pourra induire un coût supporté par ce vendeur et qui lui sera facturé par le centre payeur en déduction du paiement.

Lorsque au cours d'une étape 52 les informations 48 à 50 sont reçues par le centre payeur 3, ce centre payeur 3 émet un appel téléphonique 53 à destination du téléphone mobile 1. L'appel 53 sera de préférence un appel de type particulier. Cet appel utilisera un protocole particulier de transmission dit SMS, pour Short Message Service dont la signification est petit message de service. Sans entrer dans les détails de ce type de messages SMS, il suffit de savoir qu'ils sont munis d'un en-tête 54 (ou d'une queue) caractéristique et que le microprocesseur 22, en réception est capable de reconnaître et de les traiter comme tel. En général, un traitement spécifique associé à cet en-tête caractéristique 54 du message SMS concerne la sollicitation d'une sonnerie du téléphone mobile qui est différente d'une sonnerie normale lors d'un appel vocal.

En outre, ces messages de service sont destinés à être stockés dans la mémoire de données 24 et/ou dans la mémoire de données 31 du circuit SIM 15. L'en-tête est suivie par ailleurs de l'adresse de celle de ces mémoires où ce message doit être stocké. Dans l'invention, l'adresse du message SMS sera l'adresse de la mémoire 31. Dans ce but une zone 55 du message SMS comporte l'adresse 31 (pour la mémoire 31 ). Selon l'invention, la nature du message elle-même comportera un sous en-tête compréhensible par le microprocesseur 29 (en application du programme 43) pour détecter que ce message SMS est une requête de lancement d'une session de paiement. En variante le microprocesseur 22 fait cette détection.

La figure 2b montre ainsi que le message comporte l'en-tête SMS en zone 54, l'adresse 31 en zone 55 et un symbole $ en zone 56 signalant qu'il s'agit de lancer une session de paiement. En définitive le programme 43 comporte un test pour vérifier que tous les messages SMS qui arrivent sur le bus 33 possèdent en zone 56 l'information correspondant au paiement (le symbole $ par exemple). Dans une zone 57, le reste du message SMS comporte certaines des caractéristiques de la transaction 48 et 49, ou d'autres qui lui correspondent. Par exemple ces caractéristiques comportent l'information 48 de prix. Mais l'indication 49 de référence pourra être remplacée par le nom en clair du commerçant. En effet, il peut être préférable pour l'utilisateur du téléphone mobile de recevoir dans son téléphone mobile des indications relatives à la personnalité de son vendeur plutôt que des références de son numéro de compte en banque, qu'il n'est pas à même de vérifier facilement. De préférence, la zone 57 comportera les informations bancaires du commerçant et de la transaction utilisables pour calculer un certificat même si ces informations ne sont pas toutes affichées.

Au cours d'une étape 58, le centre payeur 3 émet donc au moyen de l'interface 19 le message de la figure 2b. Celui-ci est reçu par le téléphone mobile, après que la communication téléphonique ait été établie par l'intermédiaire de la station de base 17, et que ce message ait été démodulé et décodé au cours d'une étape 59 comme un message de type SMS. Par le décodage de la zone 54, le message SMS est adressé au cours d'une étape 60, au circuit SIM 15 du fait du décodage de la zone 55.

Au cours d'une étape 61 ultérieure, par décodage de la zone 56, le circuit SIM 15 (ou le téléphone mobile lui-même) reconnaît qu'il s'agit d'une opération de paiement et met alors en service la suite correspondant au programme 43 de la mémoire 30. Dans ces conditions, le circuit SIM 15 va effectuer un ensemble 62 d'opérations au cours desquelles le circuit SIM 15 réalise les fonctions d'un lecteur de carte à puce.

Comme première opération, le circuit SIM 15 peut prélever le numéro de série de la carte à puce 16 et le faire transmettre immédiatement par le téléphone mobile 14 au centre payeur 3. Celui-ci vérifie que la carte à puce 16 introduite n'est pas une carte sujette à une opposition. Le cas échéant, il envoie un message de type CARTE INTERDITE que le circuit SIM 15 fait éditer sur l'écran 27.

Les fonctions 62 d'un lecteur de carte à puce comportent essentiellement une vérification 63 de ce que la carte à puce est détenue par son véritable porteur. Dans la pratique la vérification 63 est une demande de vérification. La vérification proprement dite est effectuée en envoyant cette demande à la carte à puce qui la reçoit au cours d'une étape 64. La carte à puce effectue alors la vérification de son porteur au cours d'une étape 65. Cette étape 65 comporte une demande faite au porteur du téléphone mobile (supposé être le propriétaire de la carte à puce) de la composition, sur le clavier 28 du téléphone mobile 14, du code porteur : le code PIN de la carte à puce cette fois. On verra plus loin comment cette opération de vérification peut être menée en pratique.

Lorsque l'opération de vérification est menée à terme son résultat est transmis au cours d'une opération 66 au circuit SIM 15 jouant toujours le rôle du lecteur de carte à puce. Ainsi à l'issue de la vérification signalant notamment que le porteur était un porteur autorisé (ou du moins connaissant le bon code secret de la carte), le circuit SIM 15 reçoit ce résultat au cours d'une opération 67 et calcule au cours d'une opération 68 un certificat relatif à la transaction.

Le fonctionnement du circuit SIM 15 en lecteur de carte à puce nécessite la prise de contrôle par le circuit SIM 15 du bus 21 et l'affichage sur l'écran 27 des références de la transaction, notamment celles qui sont pertinentes ici c'est-à-dire essentiellement le prix et le nom du commerçant ou du vendeur. Le nom du vendeur peut toutefois être remplacé par son numéro de compte en banque. Le calcul du certificat est établi sur la base d'une part d'un numéro de série de la carte à puce 16 (communiqué au cours de l'étape 64 ou de l'étape 66 au circuit SIM 15), d'un compteur d'opérations de cette carte à puce, du montant de la transaction ainsi que de tout autre type d'information retenu par le centre payeur 3.

Une fois que le calcul du certificat est effectué au cours de l'étape 68, ce certificat est envoyé au centre payeur 3 au cours d'une étape 69. L'étape 69 redonne en fait l'initiative au téléphone mobile 14 proprement dit pour que celui-ci envoie en une étape 70 un message de type SMS au centre payeur 3. Ce type d'envoi est déjà prévu dans les fonctionnements normaux des téléphones mobiles. Il n'est cependant pas nécessaire que l'opération 69 s'effectue en temps réel, immédiatement après l'opération 68. Il serait possible de solliciter le téléphone mobile ultérieurement. Lorsque le certificat est envoyé au centre payeur 3, il est reçu dans ce dernier au cours d'une étape 71 pendant laquelle les différents éléments du paiement sont pris en compte pour leur traitement financier au cours d'une étape 72.

Une fois que ces inscriptions financières 72 sont effectuées, le centre payeur 3 émet dans une étape 73 des acquits à destination et du commerçant et du payeur. L'envoi d'acquits n'est cependant pas une nécessité. C'est une solution préférée pour rassurer à la fois le vendeur et l'acheteur. A destination du commerçant l'acquit peut être réalisé sous la forme d'un envoi d'un message dans une messagerie électronique à disposition du commerçant. Au besoin la demande d'indication de l'adresse de cette messagerie électronique lui sera faite au cours de l'étape 51.

En ce qui concerne l'acheteur, l'acquit sera effectué de la même façon que la demande de session de paiement par envoi d'un message de type SMS. Cependant ce message comportera alors en zone 56 une indication différente, par exemple la lettre A, pour indiquer qu'il s'agit d'afficher sur l'écran du téléphone mobile des informations d'acquit. La réception des acquits 74 peut ainsi être gérée directement par le téléphone mobile 14, comme une fonction normale de ce téléphone mobile. Cependant on peut préférer que cet acquit soit répercuté, au cours d'une étape 75, dans le circuit SIM 15 qui au cours d'une opération 76 provoque l'édition sur l'écran 27 du téléphone mobile d'une information que la transaction a été menée à terme. C'est cette nature de message SMS qui fait qu'on peut choisir que l'acquit soit transmis en mode différé au téléphone mobile 14. On pourra alors considérer, dans le dernier cas, que le paiement n'est valablement effectué que si l'acquit est enregistré dans le circuit SIM 15.

En effet, s'il n'y a pas suffisamment de provision sur le compte de l'acheteur, le paiement pourra être refusé. Si on veut agir autrement, on peut provoquer un échange d'information préalable entre le centre payeur 3 et la carte à puce 16, par l'intermédiaire du téléphone 14. Cet échange préalable trouve sa place avant l'étape 63. Il consiste à transmettre au centre payeur 3 les références de la carte à puce 16. Le centre payeur 3, qui connaît déjà le montant 48 du paiement, se connecte à une base de données 84 de la banque du payeur (dont il connaît maintenant la désignation) pour obtenir l'autorisation de paiement.

En variante, le centre payeur 3 sera contenu dans le terminal du commerçant, le terminal du vendeur. En pratique on incorpore le centre payeur dans le terminal du vendeur. Ceci signifie par exemple que les circuits de ce centre payeur 3 seront accessibles au terminal 1 par une liaison qui n'empruntera pas de liaisons téléphoniques. Dans cette variante, le terminal 1-centre payeur 3 du vendeur peut lui-même être un téléphone mobile : c'est-à-dire par exemple physiquement un seul et même appareil. Dans ce cas, ce terminal 1-centre payeur 3 du vendeur est en relation avec une carte à puce : celle du vendeur. Dans une utilisation pratique correspondant à ce cas, les deux cartes à puces ou au moins l'une d'entre elles, pourront être des cartes à puce porte-monnaie électronique, et la transaction pourra correspondre à un échange entre particuliers. Dans une telle utilisation, les deux téléphones mobiles échangeront un message de paiement, le débit d'un porte-monnaie électronique étant compensé par le crédit de l'autre. Les opérations 59 à 70 (et 75 et 76) seront exécutées par le téléphone mobile de l'acheteur, les autres opérations, 47 à 58 et 71 à 73, étant entreprises par l'autre téléphone mobile : celui du vendeur. Dans cette variante, le terminal 1 qui comporte le centre payeur 3 peut en outre n'être pas mobile mais être un poste fixe.

Le paiement proprement dit se produira par une succession d'étapes correspondant à un paiement par porte-monnaie électronique, la particularité ici étant que les deux porte-monnaie électroniques seront reliés par une voie hertzienne, et que les fonctions de la compensation seront réparties dans les deux lecteurs de carte à puce. Selon ce qui a été décrit précédemment, ces fonctions pourront être mémorisées dans les mémoires programmes 23, 30, ou 36 accessibles dans chacun des téléphones mobiles.

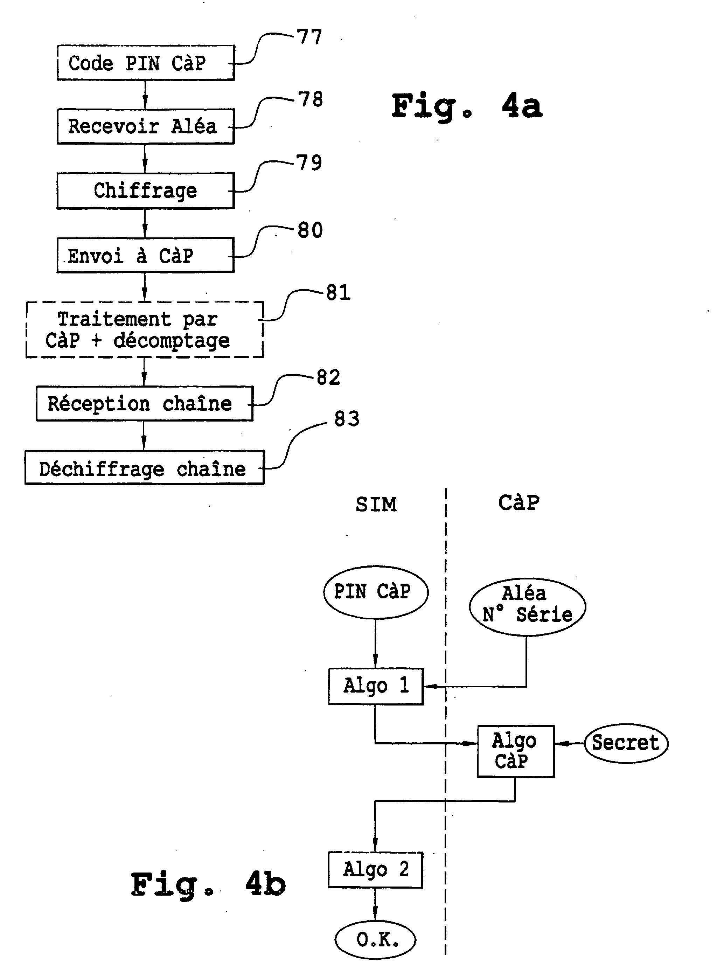

Les figures 4a et 4b montrent des opérations de vérification de codes secrets, et/ou d'authentification de lecteurs de cartes à puce (donc ici du téléphone mobile 14 ou du circuit SIM 15) et/ou de cartes à puces elles-mêmes. Par exemple une carte à puce transmet à un lecteur de carte à puce, ici le circuit SIM 15 un aléa ainsi que son numéro de série. Le circuit SIM 15 demande en une opération 77 à l'utilisateur du téléphone mobile de composer le code PIN de la carte à puce sur le clavier 28 et combine ce code PIN avec cet aléa à l'aide d'un algorithme ALGO1. Le résultat de ce chiffrage en une opération 79 est envoyé au cours d'une opération 80 à la carte à puce. La carte à puce effectue alors à l'aide de son secret la mise en oeuvre d'un algorithme inverse, ALGO CARTE A PUCE, au cours d'une étape 81. Eventuellement la carte à puce compte le nombre de tentatives pour les faire cesser au bout d'un nombre limité, par exemple trois. Au cours de l'opération 81, la carte à puce, et notamment son programme, connaissant l'information de secret d'une part et l'information de code PIN composée par l'utilisateur d'autre part est capable de vérifier que ces deux informations se correspondent, ou ne se correspondent pas. Elle transmet alors le résultat en une chaîne de caractère au circuit SIM 15. Celui-ci reçoit cette chaîne de caractères au cours d'une étape 82 et la déchiffre au cours d'une étape 83. L'algorithme ALGO2 de déchiffrement de la chaîne produite par l'algorithme de la carte à puce conduit à produire le résultat, bon ou mauvais de la vérification entreprise.

De préférence la carte à puce vérifiera que le circuit SIM ou le téléphone mobile est bel et bien un circuit conforme aux spécifications édictées par le centre payeur 3. Dans ce but les opérations de la figure 4b seront menées, une autre fois, avec éventuellement un autre algorithme de carte à puce, et en entrant au lieu du code PIN de carte à puce un certificat de certification du programme 43 disponible dans la mémoire 31. Les certifications comportent notamment la prise en compte de certaines instructions du programme 43 et leur codage par un algorithme de chiffrement, par exemple l'algorithme ALGO1 ou un autre. La carte à puce sait ce qu'elle doit recevoir en résultat de ce chiffrage par l'algorithme ALGO1.

En sens inverse, le programme 43 doit pouvoir authentifier que la carte à puce 16 qui est introduite dans le lecteur de carte à puce du téléphone mobile est une carte à puce véritable et non pas une carte à puce falsifiée. Dans ce cas il effectue avec la carte à puce, notamment sur la base de son numéro de série, une suite d'opérations du même type par lesquelles il vérifie que la carte à puce est acceptable. Ces authentifications sont préalables à la session de paiement constituée en fait par le calcul 68 du certificat de paiement, ou message de paiement.

## Revendications

1. Procédé de paiement comportant les étapes suivantes
- on définit (47) des caractéristiques (48, 49) d'une transaction commerciale entre un vendeur et un utilisateur d'un téléphone mobile (14),
- on munit le téléphone mobile de l'utilisateur d'une interface (40, 41) de lecture d'une carte à puce (16),
- on transmet à un centre payeur (3) par un terminal (13) du vendeur une requête (51) en paiement, un numéro (50) d'appel du téléphone mobile du client, et des caractéristiques de la transaction,
- le centre payeur appelle (53) le téléphone mobile,
- lorsque la connexion est établie, le centre payeur fait exécuter (60) par le téléphone mobile une session de paiement,
- lors de la session de paiement, le téléphone mobile lance une procédure (62) sécurisé de paiement avec une carte à puce du client insérée dans le lecteur de carte à puce du téléphone mobile, **caractérisé en ce que**
- la carte à puce (16) effectue alors la vérification de son porteur, et à l'issue de la vérification signale que le porteur est un porteur autorisé, un circuit de sécurité (15) du lecteur de carte à puce calcule un certificat relatif à la transaction,
- une fois que le calcul du certificat est effectué, ce certificat est envoyé au centre payeur (3).

2. Procédé selon la revendication 1, **caractérisé en ce que**
- on enregistre (43) la procédure sécurisée dans un circuit de contrôle sécurisé (15) et
- on fait exécuter (62) cette procédure par ce circuit de contrôle sécurisé.

3. Procédé selon la revendication 2, **caractérisé en ce que** lors de la procédure de paiement,
- on contrôle (65) un code porteur de la carte à puce.

4. Procédé selon l'une des revendications 1 à 3, **caractérisé en ce que**
- la procédure sécurisée de paiement étant une opération certifiée, on contrôle la certification de cette procédure.

5. Procédé selon l'une des revendications 1 à 4, **caractérisé en ce que**
- le centre payeur fait exécuter la session de paiement par envoi (19) de message de type SMS.

6. Procédé selon l'une des revendications 1 à 5, **caractérisé en ce que**
- la procédure de paiement comporte un envoi par le téléphone mobile, au centre payeur, d'un message (68) d'accord de paiement, et un envoi (73) en retour par le centre payeur au téléphone mobile d'un message de réception de cet accord.

7. Procédé selon l'une des revendications 1 à 6, **caractérisé en ce que**
- la procédure de paiement s'effectue en temps réel.

8. Procédé selon l'une des revendications 1 à 7, **caractérisé en ce que**
- la procédure de paiement sécurisée authentifie préalablement à la session de paiement que la carte à puce est une carte à puce de paiement bancaire valide et ou autorisée.

9. Procédé selon l'une des revendications 1 à (8), **caractérisé en ce que** le centre payeur obtient (84) une autorisation de paiement avec la carte à puce.

10. Procédé selon l'une des revendications 1 à 9, **caractérisé en ce que**
- on modifie la carte à puce (16) pour qu'elle puisse exécuter une procédure sécurisée de paiement par téléphone.

11. Procédé selon l'une des revendications 1 à 10, **caractérisé en ce que**
- on incorpore le centre payeur dans le terminal du vendeur.

12. Procédé selon l'une des revendications 1 à 11, **caractérisé en ce que**
- on provoque un échange entre deux téléphones mobiles.

## Claims

1. A method of payment comprising the following steps:
- the characteristics (48, 49) of a commercial transaction between a vendor and a user of a mobile telephone (14) are defined (47),
- the mobile telephone of the user is provided with a smart-card (16) reader interface (40, 41),
- a request (51) for payment, a call number (50) of the customer's mobile telephone and characteristics of the transaction are transmitted to a payment center (3) through a terminal (13) of the vendor,
- the payment center calls (53) the mobile telephone,
- when the connection is set up, the payment center makes the mobile telephone execute (60) a payment session,
- during the payment session, the mobile telephone launches a secured payment procedure (62) with a smart card of the customer inserted into the smart-card reader of the mobile telephone, wherein
- the smart card (16) performs a verification to ascertain its bearer, and at the end of the verification confirms that the bearer is an authorised bearer, a security circuit (15) of the smart card reader computes a certificate in relation with the transaction.
- once the computing of the certificate made, the certificate is sent to a payment center (3).

2. A method according to claim 1, wherein
- the secured procedure is recorded (43) in a secured control circuit (15) and
- this secured control circuit is made to execute (62) this procedure.

3. A method according to claim 2 wherein, during the payment procedure,
- a bearer code of the smart card is checked (65).

4. A method according to one of the claims 1 to 3, wherein
- since the secured payment procedure is a certified operation, the certification of this procedure is checked.

5. A method according to one of the claims 1 to 4, wherein
- the payment center obtains execution of the payment session by sending (19) an SMS type message.

6. A method according to one of the claims 1 to 5, wherein
- the payment procedure comprises a dispatch, by the mobile telephone to the payment center, of a message (68) of agreement to make payment, and a dispatch (73), in return, by the payment center to the mobile telephone, of a message of reception of this agreement.

7. A method according to one of the claims 1 to 6, wherein
- the payment procedure is done in real time.

8. A method according to one of the claims 1 to 7, wherein
- the secured payment procedure, prior to the payment session, authenticates the fact that the smart card is a valid and/or authorized smart card.

9. A method according to one of the claims 1 to 8, wherein the payment center obtains (84) an authorization of payment with the smart card.

10. A method according to one of the claims 1 to 9, wherein
- the smart card (16) is modified so that it can execute a secured payment procedure by telephone.

11. A method according to one of the claims 1 to 10, wherein
- the payment center is incorporated into the terminal of the vendor.

12. A method according to one of the claims 1 to 11, wherein
- an exchange is prompted between two mobile telephones.

## Patentansprüche

1. Zahlungsverfahren mit den folgenden Schritten:
- Definition (47) der Eigenschaften (48, 49) eines Handelsgeschäftes zwischen einem Verkäufer und einem Benutzer eines Mobiltelefons (14),
- Ausrüsten des Mobiltelefons des Benutzers mit einer Schnittstelle (40, 41 ) zum Lesen von Chipkarten (16),
- Übermitteln einer Zahlungsanforderung (51), einer Mobiltelefonrufnummer (50) des Kunden und der Eigenschaften des Handelsgeschäfts an ein Zahlungszentrum (3) mittels eines Terminals (13) des Verkäufers,
- Anruf (53) des Zahlungszentrums bei dem Mobiltelefon,
- das Zahlungszentrum lässt das Mobiltelefon einen Zahlungsvorgang durchführen (60), sobald die Telefonverbindung hergestellt ist,
- während des Zahlungsvorgangs löst das Mobiltelefon eine gesicherte Zahlungsprozedur (62) mit einer Chipkarte des Kunden aus, die in den Chipkartenleser des Mobiltelefons eingeführt wird,
**dadurch gekennzeichnet, dass**
- die Chipkarte (16) die Überprüfung des Inhabers vornimmt und. nach Abschluss der Überprüfung signalisiert, dass der Inhaber ein berechtigter Inhaber ist, woraufhin ein Sicherheitsschaltkreis (15) des Kartenlesers ein Zertifikat betreffend das Handelsgeschäft berechnet,
- das Zertifikat sobald die Berechnung abgeschlossen ist an das Zahlungszentrum (3) gesendet wird.

2. Verfahren nach Anspruch 1, **dadurch gekennzeichnet, dass**
- die gesicherte Prozedur in einem gesicherten Kontrollschaltkreis (15) abgespeichert wird und
- die Prozedur durch den gesicherten Kontrollschaltkreis ausgeführt wird (62).

3. Verfahren nach Anspruch 2, **dadurch gekennzeichnet, dass** bei der Zahlungsprozedur
- ein Inhabercode der Chipkarte überprüft wird.

4. Verfahren nach einem der Ansprüche 1 bis 3, **dadurch gekennzeichnet, dass**
- die gesicherte Zahlungsprozedur ein zertifizierter Vorgang ist und das Zertifikat des Prozesses kontrolliert wird.

5. Verfahren nach einem der Ansprüche 1 bis 4, **dadurch gekennzeichnet, dass**
- das Zahlungszentrum den Zahlungsvorgang durch Versendung (19) einer Mitteilung vom Typ SMS auslöst.

6. Verfahren nach einem der Ansprüche 1 bis 5, **dadurch gekennzeichnet, dass**
- die Zahlungsprozedur die Versendung einer Zahlungsfreigabemitteilung (68) durch das Mobiltelefon an das Zahlungszentrum und die Rücksendung einer Empfangsbestätigung (73) durch das Zahlungszentrum an das Mobiltelefon umfasst.

7. Verfahren nach einem der Ansprüche 1 bis 6, **dadurch gekennzeichnet, dass**
- die Zahlungsprozedur in Echtzeit durchgeführt wird.

8. Verfahren nach einem der Ansprüche 1 bis 7, **dadurch gekennzeichnet, dass**
- die gesicherte Zahlungsprozedur vor dem Zahlungsvorgang bestätigt, dass die Chipkarte eine gültige und /oder autorisierte Kreditkarte ist.

9. Verfahren nach einem der Ansprüche 1 bis 8, **dadurch gekennzeichnet, dass** das Zahlungszentrum eine Genehmigung der Kartenzahlung erhält.

10. Verfahren nach einem der Ansprüche 1 bis 9, **dadurch gekennzeichnet, dass**
- die Chipkarte (16) derart modifiziert wird, dass sie einen gesicherten Zahlungsvorgang per Telefon ausführen kann.

11. Verfahren nach einem der Ansprüche 1 bis 10, **dadurch gekennzeichnet, dass**
- das Zahlungszentrum in das Terminal des Verkäufers integriert ist.

12. Verfahren nach einem der Ansprüche 1 bis 11, **dadurch gekennzeichnet, dass**
- ein Austausch zwischen zwei Mobiltelefonen herbeigeführt wird.
